Europäisches Patentamt

European Patent Office

Office européen des brevets

(11) Publication number : **0 529 956 A1**

## (12) EUROPEAN PATENT APPLICATION

(21) Application number : 92307627.7

(22) Date of filing : 20.08.92

(51) Int. Cl.⁵ : **C09K 11/80, H01J 61/44, C09K 11/86**

(30) Priority : 23.08.91 JP 212182/91
31.01.92 JP 16909/92

(43) Date of publication of application :
03.03.93 Bulletin 93/09

(84) Designated Contracting States :
**DE GB**

(71) Applicant : **KABUSHIKI KAISHA TOSHIBA
72, Horikawa-Cho Saiwai-ku
Kawasaki-shi Kanagawa-ken (JP)**

(72) Inventor : **Yamakawa, Masahiko, c/o
Int.Pty.Div., K.K. Toshiba
1-1, Shibaura 1-chome, Minato-ku
Tokyo (JP)**

Inventor : **Terashima, Kenji, c/o Int.Pty.Div.,
K.K. Toshiba
1-1, Shibaura 1-chome, Minato-ku
Tokyo (JP)**
Inventor : **Hayashi, Yuko, c/o Int.Pty.Div., K.K.
Toshiba
1-1, Shibaura 1-chome, Minato-ku
Tokyo (JP)**
Inventor : **Takemura, Hirofumi, c/o Int.Pty.Div.,
K.K. Toshiba
1-1, Shibaura 1-chome, Minato-ku
Tokyo (JP)**
Inventor : **Tomura, Chiharu, c/o Int.Pty.Div.,
K.K. Toshiba
1-1, Shibaura 1-chome, Minato-ku
Tokyo (JP)**
Inventor : **Sugimoto, Yuji, c/o Int.Pty.Div., K.K.
Toshiba
1-1, Shibaura 1-chome, Minato-ku
Tokyo (JP)**

(74) Representative : **Freed, Arthur Woolf et al
MARKS & CLERK 57-60 Lincoln's Inn Fields
London WC2A 3LS (GB)**

(54) **Blue phosphor and fluorescent lamp using the same.**

(57)    A blue phosphor activated with divalent europium and manganese and represented by the following general formula :

$$(M_{1-y-z}Eu_yMn_z)O \cdot aAl_2O_3$$

(wherein M stands for at least one member selected from the group consisting of Mg, Ca, Sr, and Ba and a, y, and z stand for numerical values satisfying the expressions, $1.5 \leq a \leq 4.5$, $0.03 \leq y \leq 0.10$, and $0.01 \leq z/y \leq 0.15$) exhibits outstanding emission intensity under excitation by the mercury bright line and succumbs only to sparing decrease of emission intensity during the lighting of the fluorescent lamp using the blue phosphor.

# FIG. I

EP 0 529 956 A1

This invention relates to a blue phosphor which enjoys high emission intensity and further exhibits enhanced resistance to degradation of emission intensity during use and to a fluorescent lamp which uses the blue phosphor.

In recent years, as a fluorescent lamp for general-purpose illumination, the three-band type fluorescent lamp which combines a high color-rendering property with high efficiency has been developed and has been finding widespread acceptance. This three-band type fluorescent lamp is the type of a fluorescent lamp which is enabled to emit light in white color or a desired color owing to the use therein of a luminescent screen produced by forming in a stated shape a mixed phosphor obtained by mixing in a prescribed ratio three species of phosphors possessing relatively narrow bands of emission spectral distribution and generating luminescence severally in blue, green, and red colors. When the luminescent characteristic of a particular phosphor varies while the lamp using the phosphor is in a glowing state, therefore, the color of the light emitted then by the lamp shifts from that of the color of the initially emitted light. The phenomenon of color shift occurs, depending on the decrease of the emission output (emission intensity) of each of the component phosphors while the lamp is in the glowing state and the difference in magnitude of change in the color of each of the emitted lights, and this phenomenon constitutes itself a main cause for degradation of quality.

As the blue light component of the recent three-band type fluorescent lamp, aluminate phosphors are prevalently used. For example, $(Ba, Eu)Mg_2Al_{16}O_{27}$, i.e. a europium-activated aluminate blue phosphor, (disclosed in Japanese Patent Publication No, 22,836/1977, for example), $AO\text{-}Al_2O_3$, (A for an alkaline earth element; disclosed in Japanese Patent Publication No. 22,495/1983, for example), and an aluminate phosphor produced as a solid solution with phosphorus oxide (disclosed in Japanese Unexamined Patent Publication No. 69,885/1986, for example) have been known to date. The aluminate phosphor as the blue light component is not satisfactory in terms of the maintenance of emission output (emission intensity) while the lamp is in the glowing state and has many points requiring further improvement.

As described above, the three-band type fluorescent lamp has been desired to enhance the lamp's emission intensity and, at the same time, diminish the phenomenon of color shift. For the purpose of minimizing the phenomenon of color shift, it is necessary that the decrease in the emission output (emission intensity) of the phosphor during the glowing of the lamp should be repressed to the fullest possible extent. The conventional blue phosphors described above, however, have the disadvantage that they cannot amply maintain the emission output (emission intensity) during the glowing of the lamp and suffers the emission output to decline with aging. This quality constitutes itself a main cause for the degradation of the quality of the three-band type fluorescent lamp.

This invention, produced for the purpose of solving the problems mentioned above, has as one object thereof the provision of a blue phosphor which exhibits an excellent emission intensity under excitation by the mercury bright line of 254 nm, for example, and succumbs only sparingly to the degradation of emission intensity while the lamp using the phosphor is in the glowing state. Another object of this invention is to provide a fluorescent lamp which is enabled to curb the occurrence of such phenomena as color shift.

The blue phosphor of this invention is a phosphor which is represented by the following formula (1):

$$(M_{1-y-z}Eu_yMn_z)O\cdot aAl_2O_3 \quad (1)$$

wherein M stands for at least one element selected from the group consisting of Mg, Ca, Sr, and Ba and a, y, and z stand for numerical values satisfying the expressions, $1.5 \leqq a \leqq 4.5$, $0.03 \leqq y \leqq 0.10$, and $0.01 \leqq z/y \leqq 0.15$.

Specifically, the blue phosphor of this invention has been perfected on the basis of the finding that the emission of light in a blue color can be realized, the initial emission intensity enhanced, and the degradation of emission intensity by aging repressed by activating an aluminate with divalent europium and manganese and fixing the ratio of europium to manganese in the range mentioned above.

The numerical values of y, z, and a in the aforementioned formula (1) are limited to the ranges mentioned above for the following reasons.

If the value of y which represents the amount of Eu to be used for activation is less than 0.03, the concentration of the activating agent in the phosphor is too low for the emission intensity to be sufficiently manifested. If the value of y is not less than 0.10, the emission intensity is degraded by the phenomenon of concentration quenching.

The value of z/y which represents the ratio of the amounts of Eu and Mn to be used for activation constitutes itself an especially important value for the blue phosphor of this invention and must be fixed in the range between 0.01 and 0.15. If the value of z/y is less than 0.01, the degradation of the emission intensity during the glowing of the lamp cannot be curbed sufficiently. Conversely, if the value of z/y is not less than 0.15, the emission wavelength is shifted toward green or blue green, the initial emission intensity of the lamp obtained when the blue phosphor is mixed with green and red phosphors is unduly low, and the quality of the produced fluorescent lamp is degraded. Thus, the fluorescent lamp lacks practical utility. Preferably, the range of the value z/y is between 0.015 and 0.12.

If the value of a which represents the amount of alumina is less than 1.5, the crystal structure of the blue phosphor becomes unstable and succumbs heavily to degradation during the process of manufacture of a fluorescent lamp. Thus, the produced lamp lacks practical utility. If the value is not less than 4.5, the emission intensity is lowered owing to the occurrence of a non-emission phase.

A blue phosphor which has a composition represented by the following general formula (2) exhibits an excellent emission intensity under excitation by the mercury bright light and succumbs to a still lower degradation of emission intensity while the lamp using the blue phosphor is in the glowing state:

$$(M_{1-y'-z'}Eu_{y'}Mn_{z'})O \cdot a'Al_2O_3 \cdot bB_2O_3 \cdot cX_2 \quad (2)$$

wherein M stands for at least one element selected from the group consisting of Mg, Ca, Sr, and Ba, X stands for at least one element selected from the group consisting of F and Cl, a', b, c, y', and z' stand for numerical values satisfying the expressions, $1.5 \leq a' \leq 5.5$, $0 \leq b \leq 5 \times 10^{-3}$, $0 \leq c \leq 8 \times 10^{-3}$, $0.03 \leq y' \leq 0.10$, and $0.01 \leq z'/y' \leq 0.15$, and b and c do not simultaneously stand for 0.

The numerical values of a', b, c, y', and z' in the formula (2) shown above are limited in the ranges mentioned above for the following reasons. If the value of a' which represents the amount of alumina is less than 1.5, the crystal structure of the blue phosphor becomes unstable and succumbs heavily to degradation during the process for production of a fluorescent lamp and the produced fluorescent lamp fails to give an ample emission output. If this value exceeds 5.5, the amount of a non-emission phase which occurs is no longer negligible and no ample emission output (total luminous flux) is obtained. When the value of b which represents the amount of boron oxide is below $5 \times 10^{-3}$, the boron oxide contributes to the improvement of emission output. If this value conversely exceeds $5 \times 10^{-3}$, the chromaticity (x, y) of the fluorescent lamp is subject to wide variation while the lamp is in the glowing state. Thus, the fluorescent lamp lacks practical utility. The value of c which represents the amount of $X_2$ is selected in a range below $8 \times 10^{-3}$, preferably between $2 \times 10^{-5}$ and $8 \times 10^{-3}$. If the value exceeds $8 \times 10^{-3}$, the emission output of the three-band type fluorescent lamp is unduly low while the lamp is in the glowing state.

If the value of y' which represents the amount of Eu to be used for activation is less than 0.03 or more than 0.10, the emission output is unduly low. If the value of z'/y' which represents the ratio of the amounts of Eu and Mn to be used for activation is less than 0.01 or more than 0.15, the emission output of the three-band type fluorescent lamp while in the glowing state is markedly low.

The phosphor represented by the formula (2) manifests a conspicuous effect when it is applied to a fluorescent lamp which has a bulb wall loading of not less than 0.05 w/cm². Even when the bulb wall loading is lower than this level, the phosphor still brings about a clearly significant difference.

The blue phosphors represented by the formulas (1) and (2) are produced as follows, for example.

As respects the raw materials for the phosphor, oxides of alkaline earth metals and such compounds are hydroxides and carbonates which are easily converted at elevated temperatures into oxides of alkaline earth metals are used as starting materials for the alkali earth metal. Such europium compounds as europium carbonate which are easily converted at elevated temperatures into europium oxide are used as starting materials for europium and such manganese compounds as manganese carbonate which are easily converted at elevated temperatures into manganese oxide are used as starting materials for manganese. Aluminum oxide and such aluminum compounds as aluminum hydroxide which are easily converted at elevated temperatures into aluminum oxide are used as starting materials for aluminum. In the blue phosphor represented by the formula (2), such boron compounds as boric acid, ammonium borate, and magnesium borate are used as starting materials for boron and such halogen compounds as aluminum fluoride, magnesium fluoride, calcium fluoride, strontium fluoride, barium fluoride, aluminum chloride, magnesium chloride, calcium chloride, strontium chloride, and barium chloride are used as starting materials for a halogen.

The starting materials mentioned above are weighed out in prescribed amounts and are thoroughly ground and mixed as with a ball mill. The thorough mixture consequently obtained is placed in a heatproof container such as a crucible and fired in the open air at a temperature approximately between 1200°C and 1400°C for a period approximately between two hours and three hours. Then, the fired mixture consequently obtained is pulverized, placed again in the heatproof container such as a crucible, and fired in a reducing atmosphere at a temperature approximately between 1400°C and 1700°C for a period approximately between four hours and five hours. The product of this firing is subjected to such treatments as pulverization and cleaning with water, to give rise to a blue phosphor aimed at by this invention.

When the blue phosphor of this invention is applied to a three-band type fluorescent lamp, a red phosphor and a green phosphor in respectively prescribed amounts are mixed and the resultant mixture is applied to the inner surface of the glass bulb of the fluorescent lamp to complete the three-band type fluorescent lamp., For the purpose of enhancing the color-rendering property of the three-band type fluorescent lamp, it is permissible to add to the component phosphors mentioned above other phosphors such as, for example, a blue phosphor and a deep red phosphor.

The blue phosphor of this invention described above exhibits an excellent emission intensity and succumbs only to a sparing degradation of emission intensity while the lamp is in the glowing state and, therefore, allows production of a fluorescent lamp which is capable of precluding such adverse phenomena as color shift.

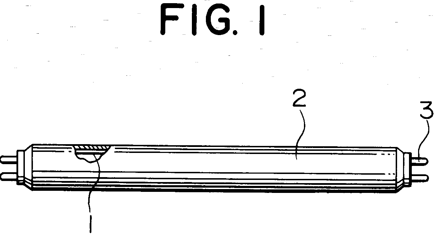

Fig. 1 is a partially cutaway cross section illustrating one example of the construction of a fluorescent lamp according to this invention.

Now, this invention will be described below with reference to working examples thereof.

Example 1:

As starting materials, 86.64 g of $BaCO_3$, 29.17 g of $Mg(OH)_2$, 0.1150 g of $MnCO_3$, 10.56 g of $Eu_2O_3$, and 254.7 g of $Al_2O_3$ were weighed out, placed in a ball mill, and thoroughly pulverized and mixed. Then, the resultant mixture was placed in a crucible and fired in the open air at 1400°C for three hours. The fired mixture was pulverized, placed again in the crucible, and fired in a reducing atmosphere consisting of 3% of hydrogen and 97% of nitrogen at 1600°C for four hours. The resultant fired mass was pulverized and subjected to treatments such as cleaning with water, to obtain an aluminate phosphor activated with divalent Eu and Mn and represented by the following formula:

$$(Ba_{0.439}Mg_{0.50}Eu_{0.06}Mn_{0.001})O \cdot 2.5Al_2O_3.$$

When this aluminate phosphor was tested for wavelength with a spectrophotofluorometer, it was found to have a central wavelength of 453 nm and to be fully useful as a blue phosphor.

Then, a fluorescent lamp was manufactured by applying this blue phosphor to the inner surface of a glass bulb.

For the purpose of comparison with this invention, a fluorescent lamp was manufactured similarly by using a blue phosphor represented by the formula $(Ba, Eu)Mg_2Al_{16}O_{27}$.

When the fluorescent lamps of Example 1 and Comparative Experiment 1 were lit up, the emission intensity (L1) of the fluorescent lamp of Example 1 immediately after manufacture was found to be 122%, a highly desirable value, based on that of the fluorescent lamp of Comparative Experiment 1 taken as 100%. After 1,000 hours' continued lighting, these fluorescent lamps were tested for emission intensity (L2). The ratio of emission intensities (L2/L1) in the case of the fluorescent lamp of Example 1 was 0.92, whereas that in the case of the fluorescent lamp of Comparative Experiment 1 was 0.78. The data indicate that the fluorescent lamp of Example 1 showed a discernible improvement in resistance to degradation of emission intensity by aging.

Example 2:

When the procedure of Example 1 was repeated, excepting 86.44 g of $BaCO_3$, 29.17 g of $Mg(oH)2$, 0.2299 g of $MnCO_3$, 10.56 g of $Eu_2O_3$, and 254.9 g of $Al_2O_3$ were used instead as starting materials, an aluminate blue phosphor activated with divalent Eu and Mn and represented by the following formula was obtained:

$$(Ba_{0.438}Mg_{0.50}Eu_{0.06}Mn_{0.002})O \cdot 2.5Al_2O_3$$

A fluorescent lamp was manufactured in the same manner as in Example 1 using the blue phosphor and then tested in the same manner as in Example 1 for emission intensity immediately after manufacture and for emission intensity after 1,000 hours' continued lighting to determine the ratio of intensities. As a result, the emission intensity immediately after manufacture was found to be 119% and the ratio of emission intensities to be 0.90, indicating that the fluorescent lamp showed discernible improvements in both the magnitudes under discussion.

Example 3:

When the procedure of Example 1 was repeated, excepting 85.85 g of $BaCO_3$, 29.17 g of $Mg(OH)_2$. 0.5748 g of $MnCO_3$, 10.56 g of $Eu_2O_3$, and 254.9 g of $Al_2O_3$ were used instead as starting materials, an aluminate blue phosphor activated with divalent Eu and Mn and represented by the following formula was obtained:

$$(Ba_{0.435}Mg_{0.50}Eu_{0.06}Mn_{0.005})O \cdot 2.5Al_2O_3$$

A fluorescent lamp was manufactured in the same manner as in Example 1 by using the blue phosphor and was tested in the same manner as in Example 1 for emission intensity immediately after manufacture and for emission intensity after 1,000 hours' continued lighting to find the ratio of emission intensities. As a result, the emission intensity immediately after manufacture was found to be 120% and the ratio of emission intensities to be 0.91, indicating that the fluorescent lamp showed discernible improvements in both the magnitudes under discussion.

Example 4:

When the procedure of Example 1 was repeated, excepting 85.06 g of $BaCO_3$, 29.17 g of $Mg(OH)_2$, 1.035 g of $MnCO_3$, 10.56 g of $Eu_2O_3$, and 254.9 g of $Al_2O_3$ were used instead as starting materials, an aluminate blue phosphor activated with divalent Eu and Mn and represented by the following formula was obtained:

$$(Ba_{0.431}Mg_{0.50}Eu_{0.06}Mn_{0.009})O \cdot 2.5Al_2O_3$$

A fluorescent lamp was manufactured in the same manner as in Example 1 by using the blue phosphor and tested in the same manner as in Example 1 for emission intensity immediately after manufacture and for emission intensity after 1,000 hours' continued lighting to find the ratio of emission intensities. As a result, the emission intensity immediately after manufacture was found to be 121% and the ratio of emission intensities to be 0.91, indicating that the fluorescent lamp showed discernible improvements in both the magnitudes under discussion.

Example 5:

When the procedure of Example 1 was repeated, excepting 68.09 g of $BaCO_3$, 32.08 g of $Mg(OH)_2$, 0.5748 g of $MnCO_3$, 17.60 g of $Eu_2O_3$, and 356.9 g of $Al_2O_3$ were used instead as starting materials, an aluminate blue phosphor activated with divalent Eu and Mn and represented by the following formula was obtained:

$$(Ba_{0.345}Mg_{0.55}Eu_{0.1}Mn_{0.005})O \cdot 3.5Al_2O_3$$

A fluorescent lamp was manufactured in the same manner as in Example 1 by using the blue phosphor and tested in the same manner as in Example 1 for emission intensity immediately after manufacture and emission intensity after 1,000 hours' continued lighting to determine the ratio of emission intensities. As a result, the emission intensity immediately after manufacture was found to be 120% and the ratio of emission intensities to be 0.89, indicating that this fluorescent lamp showed discernible improvements in both the magnitudes under discussion.

Examples 6 to 16:

Aluminate blue phosphors activated with divalent Eu and Mn and represented in Table 1 were prepared in the same manner as in the preceding examples. Fluorescent lamps were manufactured in the same manner as in Example 1 and tested for emission intensity immediately after manufacture and for emission intensity after 1,000 hours' continued lighting to find the ratio of emission intensities. The results are shown additionally in Table 1.

Table 1

| Example No. | Composition | L1 | L2 | L2/L1 |
|---|---|---|---|---|
| 1 | $(Ba_{0.439}Mg_{0.50}Eu_{0.06}Mn_{0.001})O \cdot 2.5Al_2O_3$ | 122 | 112 | 0.92 |
| 2 | $(Ba_{0.438}Mg_{0.50}Eu_{0.06}Mn_{0.002})O \cdot 2.5Al_2O_3$ | 119 | 107 | 0.90 |
| 3 | $(Ba_{0.435}Mg_{0.50}Eu_{0.06}Mn_{0.005})O \cdot 2.5Al_2O_3$ | 120 | 109 | 0.91 |
| 4 | $(Ba_{0.431}Mg_{0.50}Eu_{0.06}Mn_{0.009})O \cdot 2.5Al_2O_3$ | 121 | 110 | 0.91 |
| 5 | $(Ba_{0.345}Mg_{0.55}Eu_{0.1}Mn_{0.005})O \cdot 3.5Al_2O_3$ | 120 | 107 | 0.89 |
| 6 | $(Ba_{0.44}Mg_{0.45}Eu_{0.1}Mn_{0.01})O \cdot 1.5Al_2O_3$ | 118 | 107 | 0.91 |
| 7 | $(Ba_{0.567}Mg_{0.40}Eu_{0.03}Mn_{0.003})O \cdot 4.5Al_2O_3$ | 117 | 106 | 0.91 |
| 8 | $(Ba_{0.366}Mg_{0.60}Eu_{0.03}Mn_{0.004})O \cdot 3.0Al_2O_3$ | 120 | 108 | 0.90 |
| 9 | $(Sr_{0.438}Mg_{0.50}Eu_{0.03}Mn_{0.002})O \cdot 3.0Al_2O_3$ | 118 | 109 | 0.92 |
| 10 | $(Sr_{0.345}Mg_{0.55}Eu_{0.1}Mn_{0.005})O \cdot 1.5Al_2O_3$ | 119 | 108 | 0.91 |
| 11 | $(Ba_{0.439}Ca_{0.50}Eu_{0.06}Mn_{0.001})O \cdot 3.5Al_2O_3$ | 117 | 103 | 0.88 |
| 12 | $(Ba_{0.567}Ca_{0.40}Eu_{0.03}Mn_{0.003})O \cdot 2.5Al_2O_3$ | 118 | 103 | 0.87 |
| 13 | $(Ba_{0.40}Mg_{0.50}Ca_{0.01}Eu_{0.08}Mn_{0.01})O \cdot 2.5Al_2O_3$ | 121 | 111 | 0.92 |
| 14 | $(Ba_{0.43}Mg_{0.50}Ca_{0.009}Eu_{0.06}Mn_{0.001})O \cdot 3.0Al_2O_3$ | 122 | 112 | 0.92 |
| 15 | $(Ba_{0.938}Eu_{0.06}Mn_{0.002})O \cdot 4.0Al_2O_3$ | 118 | 106 | 0.90 |
| 16 | $(Sr_{0.935}Eu_{0.06}Mn_{0.0050})O \cdot 3.5Al_2O_3$ | 117 | 104 | 0.89 |

| Control | | | | |
|---|---|---|---|---|
| | $(Ba,Eu)Mg_2Al_{16}O_{27}$ | 100 | 78 | 0.78 |

L1: Emission intensity immediately after manufacture of fluorescent lamp

L2: Emission intensity after 1000 hours' continued lighting of fluorescent lamp

L2/L1 Ratio of emission intensities

Example 17:

$(Y,Eu)_2O_3$ as a red phosphor, $(La,Ce,Tb)PO_4$ as a green phosphor, and $(Ba_{0.439}Mg_{0.50}Eu_{0.06}Mn_{0.001})O \cdot 2.5Al_2O_3$ prepared in Example 1 as a blue phosphor were thoroughly mixed in amounts corresponding respectively to 40% by weight, 44% by weight, and 16% by weight in a total amount of 100% by weight.

A fluorescent lamp constructed as illustrated in Fig. 1 was manufactured by using the resultant mixture. The fluorescent lamp illustrated in Fig. 1 was provided with a glass bulb 2 having a fluorescent screen 1 applied to the inner surface thereof and an electric discharge gas of a stated pressure sealed in the glass bulb 2. The glass bulb 2 has electrodes 3 attached one each to the opposite terminal parts thereof. Owing to this construction of the fluorescent lamp, the fluorescent screen 1 was caused to emit light when a prescribed voltage was applied between the electrodes to excite the fluorescent screen 1 with a mercury bright line of 254 nm, for example. The fluorescent screen 1 of the fluorescent lamp was formed of the mixed phosphor mentioned above. The fluorescent lamp manufactured in this example was a neutral white lamp.

For the purpose of comparison with the present invention, a fluorescent lamp (Comparative Experiment 2) was manufactured by faithfully following the procedure of Example 17, excepting $(Ba,Eu)Mg_2Al_{16}O_{27}$ was used as a blue phosphor instead.

When the fluorescent lamps of Example 17 and Comparative Experiment 2 were lit up, the emission intensity (M1) immediately after manufacture of the fluorescent lamp of Example 17 was 120%, a highly satisfactory value, based on that of Comparative Experiment 2 taken as 100%. After 1,000 hours' continued lighting, these fluorescent lamps were tested for emission intensity (M2) to find the ratio of emission intensities (M2/M1). The ratio of emission intensities in the case of the fluorescent lamp of Example 17 was 0.93 and that in the case of the fluorescent lamp of Comparative Experiment 2 was 0.83. The data indicate that the fluorescent lamp of Example 17 showed a discernible improvement in resistance to degradation of emission intensity by aging.

Examples 18 to 32:

Fluorescent lamps were manufactured by following the procedure of Example 17, excepting varying red phosphors, green phosphors, and blue phosphors indicated in Table 2 were used instead. These fluorescent lamps were tested for emission intensity immediately after manufacture and for emission intensity after 1,000 hours' continued lighting to find the ratio of emission intensities. As a result, these fluorescent lamps were invariably found to manifest discernible improvements in quality. The results are shown additionally in Table 2.

Table 2

| Example No. | Phosphor | | | M2 | M1 | M2/M1 |
|---|---|---|---|---|---|---|
| | Blue | Green | Red | | | |
| 17 | Example 1 | $(La,Ce,Tb)PO_4$ | $(Y,Eu)_2O_3$ | 120 | 112 | 0.93 |
| 18 | Example 2 | $(La,Ce,Tb)PO_4$ | $(Y,Eu)_2O_3$ | 116 | 107 | 0.92 |
| 19 | Example 3 | $(La,Ce,Tb)PO_4$ | $(Y,Eu)_2O_3$ | 118 | 109 | 0.92 |
| 20 | Example 4 | $(La,Ce,Tb)PO_4$ | $(Y,Eu)_2O_3$ | 120 | 110 | 0.92 |
| 21 | Example 5 | $(La,Ce,Tb)PO_4$ | $(Y,Eu)_2O_3$ | 118 | 109 | 0.92 |
| 22 | Example 6 | $(La,Ce,Tb)PO_4$ | $(Y,Eu)_2O_3$ | 115 | 107 | 0.93 |
| 23 | Example 7 | $(La,Ce,Tb)PO_4$ | $(Y,Eu)_2O_3$ | 115 | 107 | 0.93 |
| 24 | Example 8 | $(La,Ce,Tb)PO_4$ | $(Y,Eu)_2O_3$ | 117 | 108 | 0.92 |
| 25 | Example 9 | $(La,Ce,Tb)PO_4$ | $(Y,Eu)_2O_3$ | 116 | 108 | 0.93 |
| 26 | Example 10 | $(La,Ce,Tb)PO_4$ | $(Y,Eu)_2O_3$ | 116 | 106 | 0.91 |
| 27 | Example 11 | $(La,Ce,Tb)PO_4$ | $(Y,Eu)_2O_3$ | 114 | 101 | 0.89 |
| 28 | Example 12 | $(La,Ce,Tb)PO_4$ | $(Y,Eu)_2O_3$ | 116 | 101 | 0.87 |
| 29 | Example 13 | $(La,Ce,Tb)PO_4$ | $(Y,Eu)_2O_3$ | 119 | 109 | 0.92 |
| 30 | Example 14 | $(La,Ce,Tb)PO_4$ | $(Y,Eu)_2O_3$ | 120 | 110 | 0.92 |
| 31 | Example 15 | $(La,Ce,Tb)PO_4$ | $(Y,Eu)_2O_3$ | 114 | 104 | 0.91 |
| 32 | Example 16 | $(La,Ce,Tb)PO_4$ | $(Y,Eu)_2O_3$ | 114 | 103 | 0.90 |
| Control 2 | $(Ba,Eu)Mg_2Al_{16}O_{27}$ | $(La,Ce,Tb)PO_4$ | $(Y,Eu)_2O_3$ | 100 | 83 | 0.83 |

M1: Emission intensity immediately after manufacture of fluorescent lamp

M2: Emission intensity after 1,000 hours' continued lighting of fluorescent lamp

M2/M1: Ratio of emission intensities

Example 33

Now, concrete phosphor compositions of this invention which are represented by the general formula (2) will be described below.

As starting materials, 125.04 g of $BaCO_3$, 46.66 g of $Mg(oH)_2$, 0.7357 g of $MnCO_3$, 14.08 g of $Eu_2O_3$, 424.15 g of $Al_2O_3$, and 7.477 g of $MgF_2$ were weighed out, placed in a ball mill, and thoroughly pulverized and mixed. The resultant mixture was placed in a crucible and fired in the open air at 1,400°C for about three hours. The resultant fired mass was pulverized, placed again in the crucible, and fired in a reducing atmosphere consisting of 3% of hydrogen and 97% of nitrogen at 1,500°C for about four hours.

The fired mass consequently obtained was pulverized and then subjected to such treatments as cleaning with water, to obtain a blue phosphor, 33-A, activated with divalent Eu and Mn and represented by the following formula:

$$(Ba_{0.396}Mg_{0.550}Eu_{0.050}Mn_{0.004})O \cdot 2.6Al_2O_3 \cdot 0.0005F_2$$

A fluorescent lamp constructed as illustrated in Fig. 1 was manufactured with the blue phosphor prepared as described above. This fluorescent lamp was tested for emission intensity and chromaticity (x, y) immediately after manufacture (initial) and for emission output and chromaticity (x, y) after 1,000 hours' continued lighting.

For the purpose of comparison, a fluorescent lamp was manufactured with a blue phosphor, 33-B, represented by the formula, $(Ba_{0.396}Mg_{0.550}Eu_{0.050}Mn_{0.004})O \cdot 2.6Al_2O_3$, the blue phosphor of the composition shown above less the halogen. This fluorescent lamp was tested for emission intensity and chromaticity (x, y) immediately after manufacture and for emission output and chromaticity (x, y) after 1,000 hours' continued lighting.

The results of the test are shown in Table 3. The data show that the fluorescent lamp of Example 33-A was further improved in initial emission intensity and in resistance to variation of chromaticity after protracted lighting.

Example 34:

As starting materials, 42.76 g of $BaCO_3$, 21.97 g of $Mg(OH)_2$, 0.1138 g of $MnCO_3$, 4.360 g of $Eu_2O_3$, 170.41 g of $Al_2O_3$, and 10.40 g of $AlF_3$ were weighed out, placed in a ball mill, thoroughly pulverized therein, and subsequently treated in the same manner as in Example 33 to obtain a blue phosphor, 34-A, activated with divalent Eu and Mn and represented by the following formula.

$$(Ba_{0.350}Mg_{0.6084}Eu_{0.040}Mn_{0.0016})O \cdot 2.7Al_2O \cdot 0.00007F_2$$

A fluorescent lamp was manufactured in the same manner as in Example 33 by using the blue phosphor obtained as described above. This fluorescent lamp was tested for emission intensity and chromaticity (x, y) (initial) immediately after manufacture and further for emission intensity and chromaticity (x, y) after 1,000 hours' continued lighting.

For the purpose of comparison, a fluorescent lamp was similarly manufactured by using a blue phosphor, 34-B, represented by the composition $(Ba_{0.350}Mg_{0.6084}-Eu_{0.0400}Mn_{0.0016})O \cdot 2.7Al_2O_3$, i.e. the blue phosphor of the aforementioned composition less the halogen, and tested similarly for emission intensity and chromaticity (x, y) immediately after manufacture and further for emission output and chromaticity (x, y) after 1,000 hours' continued lighting.

The results of the test are shown in Table 3. The data indicate that the fluorescent lamp of this working example 34-A was further improved in initial emission intensity and also in resistance to variation in chromaticity after protracted lighting.

Example 35:

As starting materials, 18.77 g of $BaCO_3$, 0.4713 g of $CaCO_3$, 27.79 g of $MgCO_3$, 0.4330 g of $MnCO_3$, 6.628 g of $Eu_2O_3$, 286.48 g of $Al(OH)_3$, 3.494 g of $H_3BO_3$, and 5.932 g of $AlF_3$ were weighed out, placed in a ball mill, thoroughly pulverized therein, and then treated in the same manner as in Example 33, to obtain a blue phosphor, 35-A, activated with divalent Eu and Mn and represented by the following formula.

$$(Ba_{0.202}Ca_{0.010}Mg_{0.700}Eu_{0.080}Mn_{0.008})O \cdot 4.0Al_2O_3 \cdot 0.0003B_2O_3. - 0.00005F_2$$

A fluorescent lamp was manufactured in the same manner as in Example 33 by using the blue phosphor obtained as described above and tested for emission intensity and chromaticity (x, y) (initial) immediately after manufacture and further for emission intensity and chromaticity (x, y) after 1,000 hours' continued lighting.

For the purpose of comparison, a fluorescent lamp was manufactured similarly by using a blue phosphor, 35-B, represented by the formula $(Ba_{0.202}Ca_{0.010}Mg_{0.700}Eu_{0.080}Mn_{0.008})-O \cdot 4.0Al_2O_3$, i.e. the blue phosphor of the composition mentioned above less the boric acid and halogen and similarly tested for emission intensity and chromaticity (x, y) immediately after manufacture and further for emission output and chromaticity (x, y) after 1,000 hours' continued lighting.

The results of test are shown in Table 3. The data indicate that the fluorescent lamp was further improved in emission intensity and improved discernibly in resistance to variation in chromaticity after protracted lighting.

Examples 36 to 47:

Blue phosphors (A) activated with divalent Eu and Mn and composed as represented by the following formulas were prepared by following the procedure of Examples 33 to 35.

36: $(Ba_{0.335}Sr_{0.050}Mg_{0.502}Eu_{0.100}Mn_{0.013})O \cdot 2.0Al_2O_3 \cdot 0.005Cl_2$

37: $(Ba_{0.4050}Mg_{0.5617}Eu_{0.0300}Mn_{0.0033})O \cdot 4.4Al_2O_3 \cdot 0.0001F_2$

38: $(Ba_{0.3692}Mg_{0.5500}Eu_{0.0800}Mn_{0.0008})O \cdot 2.5Al_2O_3 \cdot 0.00008Cl_2$

39: $(Ba_{0.358}Mg_{0.5500}Eu_{0.0800}Mn_{0.012})O \cdot 2.5Al_2O_3 \cdot 0.00008Cl_2$

40: $(Ba_{0.396}Mg_{0.5500}Eu_{0.050}Mn_{0.004})O \cdot 2.6Al_2O_3 \cdot 0.008F_2$

41: $(Ba_{0.396}Mg_{0.5500}Eu_{0.050}Mn_{0.004})O \cdot 2.6Al_2O_3 \cdot 0.00002F_2$

42: $(Ba_{0.3651}Ca_{0.0150}Mg_{0.5450}Eu_{0.0700}Mn_{0.0049})O \cdot 3.0Al_2O_3 \cdot 0.005B_2O_3 \cdot 0.0005F_2$

43: $(Ba_{0.3900}Mg_{0.5434}Eu_{0.0600}Mn_{0.0066})O \cdot 1.5Al_2O_3 \cdot 0.0007Cl_2$

44: $(Ba_{0.3900}Mg_{0.5434}Eu_{0.0600}Mn_{0.0066})O \cdot 5.5Al_2O_3 \cdot 0.0007Cl_2$

45: $(Ba_{0.2650}Ca_{0.0250}Sr_{0.010}Mg_{0.5768}Eu_{0.0800}Mn_{0.0432})O \cdot 2.3Al_2O_3 \cdot 0.00004F_2$

46: $(Ba_{0.396}Mg_{0.550}Eu_{0.050}Mn_{0.004})O \cdot 2.6Al_2O_3 \cdot 0.0000002B_2O_3 \cdot 0.0005F_2$

47: $(Ba_{0.3500}Mg_{0.6084}Eu_{0.0400}Mn_{0.0016})O \cdot 2.7Al_2O_3 \cdot 0.00007Cl_2$

For the purpose of comparison, blue phosphors (B) which corresponded to those of the compositions of the formulas of Examples 36 to 47 severally less $B_2O_3$, $Cl_2$, and $F_2$ were prepared.

Fluorescent lamps were manufactured in the same manner as in Example 33 by using the blue phosphors obtained as described above and tested for emission intensity and chromaticity (x, y) (initial) immediately after manufacture and further for emission intensity and chromaticity (x, y) after 1,000 hours' continued lighting. The results of the test are shown in addition to those obtained in Examples 33 and 35 in Table 3.

## Table 3

| Example No. | Emission intensity (%) | | Variation in chromaticity (x $10^{-3}$) A | | B | | Bulb wall loading (W/cm²) |
|---|---|---|---|---|---|---|---|
| | A | B | x | y | x | y | |
| 33 | 103.5 | 100 | 3.5 | 4.0 | 6.0 | 6.5 | 0.04 |
| 34 | 104.0 | 100 | 2.5 | 4.0 | 6.0 | 7.0 | 0.04 |
| 35 | 105.0 | 100 | 3.0 | 3.5 | 5.5 | 6.0 | 0.04 |
| 36 | 102.5 | 100 | 3.5 | 4.0 | 5.0 | 6.5 | 0.04 |
| 37 | 103.0 | 100 | 2.0 | 4.0 | 5.5 | 7.0 | 0.04 |
| 38 | 104.0 | 100 | 3.5 | 4.0 | 5.5 | 5.5 | 0.03 |
| 39 | 103.5 | 100 | 3.5 | 4.5 | 6.5 | 6.5 | 0.03 |
| 40 | 103.0 | 100 | 3.0 | 4.0 | 7.0 | 6.0 | 0.03 |
| 41 | 104.0 | 100 | 2.5 | 3.0 | 6.0 | 7.5 | 0.03 |
| 42 | 105.5 | 100 | 2.5 | 3.5 | 5.0 | 6.0 | 0.03 |
| 43 | 103.0 | 100 | 3.5 | 4.5 | 6.0 | 6.5 | 0.04 |
| 44 | 102.5 | 100 | 3.0 | 4.0 | 5.5 | 6.5 | 0.04 |
| 45 | 103.0 | 100 | 3.5 | 5.0 | 6.5 | 6.5 | 0.04 |
| 46 | 104.0 | 100 | 4.5 | 4.5 | 6.0 | 7.5 | 0.04 |

| | | | | | | | |
|---|---|---|---|---|---|---|---|
| 47 | 106.5 | 100 | 3.5 | 4.5 | 9.0 | 9.5 | 0.05 |
| 47a | 106.5 | 100 | 3.5 | 4.0 | 9.0 | 9.5 | 0.08 |
| 47b | 107.0 | 100 | 3.5 | 4.5 | 9.5 | 10.0 | 0.10 |
| 47c | 107.0 | 100 | 3.0 | 4.5 | 9.0 | 10.0 | 0.15 |

It is clearly noted from Table 3 given above that the blue phosphors of this invention containing at least either of halogen and boric acid as represented in the general formula (2) showed still higher levels of initial emission intensity and notably improved magnitudes of resistance to variation of chromaticity after protracted lighting.

Examples 48 to 65:

$(Y,Eu)_2O_3$ as a red phosphor, $(La,Ce,Tb)PO_4$ as a green phosphor, and a varying blue phosphor (each of Blue Phosphors 33 to 35 A and B and 36A to 47A) were thoroughly mixed in amounts respectively corresponding to 45% by weight, 35% by weight, and 20% by weight.

Fluorescent lamps were manufactured in the same manner as in Example 33 by using the three-band type phosphors obtained as described above. These fluorescent lamps were lit up to find emission intensity (M1) immediately after manufacture and emission intensity (M2) after 1,000 hours' continued lighting and determine the ratio of emission intensities (M2/M1). The results are shown in Table 4.

Table 4

| Example No. | Blue phosphor used Example No. | M1 | M2 | M2/M1 |
|---|---|---|---|---|
| 48 | 33A | 102.0 | 100.0 | 0.980 |
| 49 | 33B | 100.0 | 95.0 | 0.950 |

| 50 | 34A | 102.5 | 100.5 | 0.980 |
|----|-----|-------|-------|-------|
| 51 | 34B | 100.0 | 95.5  | 0.955 |
| 52 | 35A | 103.0 | 100.5 | 0.976 |
| 53 | 35B | 100.0 | 95.0  | 0.950 |
| 54 | 36A | 101.5 | 99.5  | 0.980 |
| 55 | 37A | 101.5 | 99.0  | 0.975 |
| 56 | 38A | 102.0 | 100.0 | 0.980 |
| 57 | 39A | 102.0 | 100.0 | 0.980 |
| 58 | 40A | 101.5 | 99.9  | 0.984 |
| 59 | 41A | 103.0 | 101.5 | 0.985 |
| 60 | 42A | 103.0 | 101.0 | 0.981 |
| 61 | 43A | 101.5 | 99.5  | 0.980 |
| 62 | 44A | 101.5 | 99.0  | 0.975 |
| 63 | 45A | 102.0 | 100.5 | 0.985 |
| 64 | 46A | 102.5 | 100.5 | 0.980 |
| 65 | 47A | 104.0 | 101.5 | 0.976 |

It is clearly noted from Table 4 that the three-band type fluorescent lamps using the blue phosphors of this invention invariably showed decreases in variation of chromaticity after protracted lighting, exhibited an ability to retain and manifest ideal emission efficiency for a long time, and functioned as fluorescent lamps of outstanding quality.

**Claims**

1. A blue phosphor characterized by having a composition represented by the following general formula:
$$(M_{1-y-z}Eu_yMn_z)O \cdot aAl_2O_3$$
wherein M stands for at least one element selected from the group consisting of Mg, Ca, Sr, and Ba and a, y, and z stand for numerical values satisfying the expressions, $1.5 \leqq a \leqq 4.5$, $0.03 \leqq y \leqq 0.10$, and $0.01 \leqq z/y \leqq 0.15$.

2. A blue phosphor according to claim 1, wherein y and z stand for numerical values satisfying the expression, $0.015 \leqq z/y \leqq 0.12$.

3. A fluorescent lamp having a fluorescent screen formed on the inner surface of a glass bulb, characterized by the fact that said fluorescent screen comprises a blue phosphor represented by the following general formula:
$$(M_{1-y-z}Eu_yMn_z)O \cdot aAl_2O_3$$
wherein M stands for at least one element selected from the group consisting of Mg, Ca, Sr, and Ba and a, y, and z stand for numerical values satisfying the expressions, $1.5 \leqq a \leqq 4.5$, $0.03 \leqq y \leqq 0.10$, and $0.01 \leqq z/y \leqq 0.15$.

4. A fluorescent lamp according to claim 3, wherein y and z stand for numerical values satisfying the ex-

12

pression, $0.015 \leqq z/y \leqq 0.12$.

5.   A blue phosphor characterized by having a composition represented by the following general formula:

$$(M_{1-y'-z'}Eu_{y'}Mn_{z'})O \cdot a'Al_2O_3 \cdot bB_2O_3 \cdot cX_2$$

wherein M stands for at least one element selected from the group consisting of Mg, Ca, Sr, and Ba, X stands for at least one element selected from the group consisting of F and Cl, a', b, c, y', arid z' stand for numerical values satisfying the expressions, $1.5 \leqq a' \leqq 5.5$, $0 \leqq b \leqq 5 \times 10^{-3}$, $0 \leqq c \leqq 8 \times 10^{-3}$ $0.03 \leqq y' \leqq 0.10$, and $0.01 \leqq z'/y' \leqq 0.15$, and b and c do not simultaneously stand for 0.

6.   A blue phosphor according to claim 5, wherein c stands for a numerical value satisfying the expression, $2 \times 10^{-5} \leqq c \leqq 8 \times 10^{-3}$.

7.   A fluorescent lamp having a fluorescent screen formed on the inner surface of a glass bulb, characterized by the fact that said fluorescent screen comprises a blue phosphor represented by the following general formula:

$$(M_{1-y'-z'}Eu_{y'}Mn_{z'})O \cdot a'Al_2O_3 \cdot bB_2O_3 \cdot cX_2$$

wherein M stands for at least one element selected from the group consisting of Mg, Ca, Sr, and Ba, X stands for at least one element selected from the group consisting of F and Cl, a', b, c, y', and z' stand for numerical values satisfying the expressions, $1.5 \leqq a' \leqq 5.5$, $0 \leqq b \leqq 5 \times 10^{-3}$, $0 \leqq c \leqq 8 \times 10^{-3}$, $0.03 \leqq y' \leqq 0.10$, and $0.01 \leqq z'/y' \leqq 0.15$, and b and c do not simultaneously stand for 0.

# FIG. I

European Patent
Office

**EUROPEAN SEARCH REPORT**

Application Number

EP 92 30 7627

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DATABASE WPI<br>Section Ch, Week 20,<br>Derwent Publications Ltd., London, GB;<br>Class L03, AN 79-38121B<br>& JP-A-54 045 685 (DAINIPPON TORYO) 11 April 1979<br>* abstract * | 1-5,7 | C09K11/80<br>H01J61/44<br>C09K11/86 |
| X | DATABASE WPI<br>Section Ch, Week 26,<br>Derwent Publications Ltd., London, GB;<br>Class E31, AN 78-46333A<br>& JP-A-53 054 183 (DAINIPPON TORYO) 17 May 1978<br>* abstract * | 1-5,7 | |
| A | DATABASE WPIL<br>Section Ch, Week 07,<br>Derwent Publications Ltd., London, GB;<br>Class E33, AN 81-10938D<br>& JP-B-56 002 116 (TOKYO SHIBAURA) 17 January 1981<br>* abstract * | 1,3 | |
| | | | TECHNICAL FIELDS SEARCHED (Int. Cl.5) |
| A | DATABASE WPI<br>Section Ch, Week 31,<br>Derwent Publications Ltd., London, GB;<br>Class G08, AN 74-55839V<br>& JP-A-49 026 190 (TOKYO SHIBAURA) 8 March 1974<br>* abstract * | 1-5,7 | C09K<br>H01J |
| A | GB-A-2 142 775 (TOSHIBA)<br>* the whole document * | 1,3 | |

The present search report has been drawn up for all claims

| Place of search | Date of completion of the search | Examiner |
|---|---|---|
| THE HAGUE | 18 NOVEMBER 1992 | drouot OK DOSSIE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document